# EUROPEAN PATENT APPLICATION

(11) **EP 3 279 028 A1**
(43) Date of publication of application: **07.02.2018**
(21) Application number: 16772986.2
(22) Date of filing: 30.03.2016
(51) Int. Cl.: B60N 2/22, A47C 7/14, A47C 7/46, B60N 2/02

(54) **SEAT SUPPORT APPARATUS**

(30) Priority: 02.04.2015 JP 2015076012
(71) Applicant: Aisin Seiki Kabushiki Kaisha, Aichi 448-8650 (JP)
(72) Inventor: HASHIMOTO, Kenji, Kariya-shi Aichi 448-8650 (JP); MORI, Masatoshi, Kariya-shi Aichi 448-8650 (JP)
(74) Representative: Intès, Didier Gérard André
(86) International application number: PCT/JP2016/060438
(87) International publication number: WO 2016/159105

(57) **Abstract**

A seat support device includes a base, a paddle, an airbag, and a cable. The base is fixed to an inner side of a seat. The paddle is movable toward and away from the base. The airbag is arranged between the base and the paddle. The airbag pushes a seat pad of the seat with the paddle when deployed. The cable includes a first end engaged with the base and a second end engaged with the paddle.

## Description

### TECHNICAL FIELD

The present invention relates to a seat support device.

### BACKGROUND ART

A pneumatic seat support device can change a support shape of a seat by deploying an airbag, which is arranged inside the seat, to push a seat pad. Further, such a seat support device usually includes a movable member that is moved by the expansion and contraction of the airbag, a fixed member, and an elastic member arranged between the movable member and the fixed member. Patent document 1 describes an example of a seat support device including a helical extension spring arranged between the movable member and the fixed member. When the airbag contracts, the elastic force of the helical extension spring returns the movable member to its initial position.

### PRIOR ART DOCUMENT

### PATENT DOCUMENT

Patent Document 1: Japanese National Phase Laid-Open Patent Publication No. 2008-541896

### SUMMARY OF THE INVENTION

### PROBLEMS THAT ARE TO BE SOLVED BY THE INVENTION

However, when external force acts on the movable member in a direction in which the airbag deploys (for example, when vehicle occupant pulls movable member), the seat support device of patent document 1 can move the movable member in a limitless manner against the biasing force of the elastic member. This may, for example, reduce the resilient force of the elastic member or separate the movable member.

It is an object of the present invention to provide a seat support device having higher reliability.

### MEANS FOR SOLVING THE PROBLEM

A seat support device that solves the above problem includes a base, a paddle, an airbag, and a cable. The base is fixed to an inner side of a seat. The paddle is movable toward and away from the base. The airbag is arranged between the base and the paddle. The airbag pushes a seat pad of the seat with the paddle when deployed. The cable includes a first end engaged with the base and a second end engaged with the paddle.

### BRIEF DESCRIPTION OF THE DRAWINGS

Fig. 1 is a perspective view showing a vehicle seat that includes seat support devices.
Fig. 2 is a cross-sectional view showing a seat back side portion of the vehicle seat of Fig. 1 when the airbag is in a contracted state.
Fig. 3 is a cross-sectional view showing the seat back side portion of Fig. 2 when the airbag is in a deployed state.
Fig. 4 is a perspective view showing the seat support device arranged in the seat back side portion of Fig. 2.
Fig. 5 is a diagram illustrating the operation of the seat support device shown in Fig. 4 when the airbag is in a contracted state.
Fig. 6 is a diagram illustrating the operation of the seat support device shown in Fig. 4 when the airbag is in a deployed state.
Fig. 7 is a cross-sectional view showing a seat back shoulder portion of the vehicle seat of Fig. 1 when the airbag is in a contracted state.
Fig. 8 is a cross-sectional view showing the seat back shoulder portion of Fig. 7 when the airbag is in a deployed state.
Fig. 9 is a perspective view showing the seat support device arranged in the seat back shoulder portion of Fig. 7 when the airbag is in a contracted state.
Fig. 10 is a perspective view showing the seat support device of Fig. 9 when the airbag is in a deployed state.
Fig. 11 is an enlarged view showing the proximity of a through hole extending through an upper end of a base of Fig. 9.
Fig. 12 is an enlarged view showing the proximity of a through hole extending through a lower end of the base of Fig. 9.

### EMBODIMENTS OF THE INVENTION

One embodiment of a seat support device will now be described.

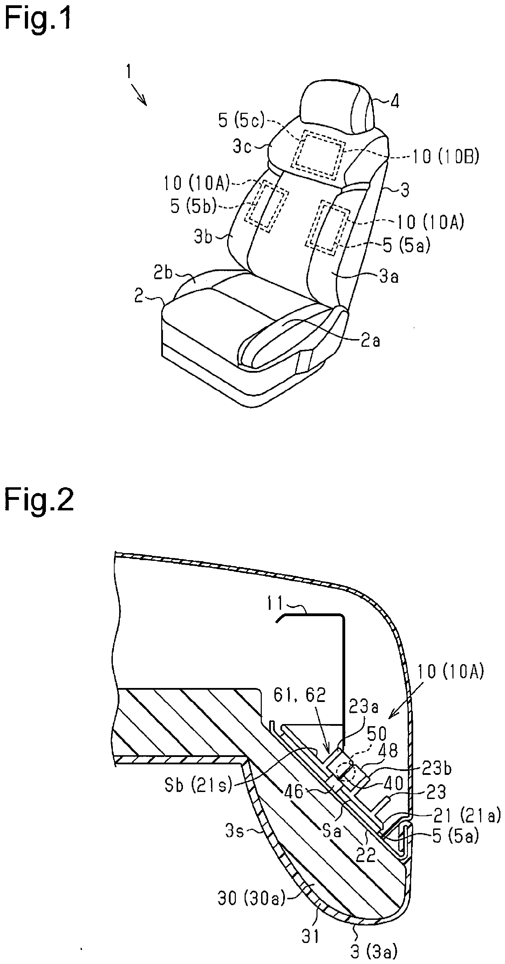

As shown in Fig. 1, a vehicle seat 1 includes a seat cushion 2, a seat back 3 arranged at a rear end of the seat cushion 2 in an inclinable manner, and a head rest 4 arranged at an upper end of the seat back 3. A plurality of seat support devices 10 (10A, 10B) are arranged in the seat back 3.

Further, the seat back 3 includes seat back side portions 3a and 3b and a seat back shoulder portion 3c, each having a frontward bulging support shape. This ensures a satisfactory seating position for the vehicle occupant who is seated on the seat 1 and kept at the seating position.

Each of the support devices 10 (10A, 10B) includes an airbag 5 (5a to 5c) arranged inside the seat back 3. An air supply/discharge device (not shown) charges the airbag 5 with air and discharges air from the airbags 5 to expand and contract the airbags 5. This allows the seat support devices 10 (10A, 10B) to change the support shapes set for the seat back side portions 3a and 3b and the seat back shoulder portion 3c.

In detail, as shown in Figs. 2 to 4, the seat support devices 10A arranged inside the seat back side portions 3a and 3b each include a base 21 and a paddle 22. The base 21 is fixed to a frame 11 of the seat back 3. The paddle 22 is movable toward and away from the base 21. The base 21 includes a front surface Sa opposing the paddle 22 and a rear surface Sb located at a side opposite to the front surface Sa.

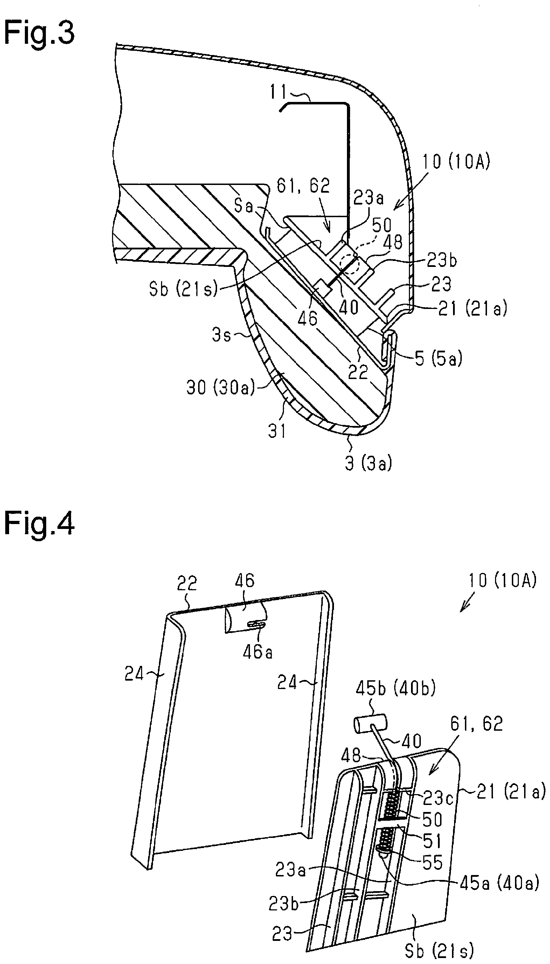

In the present embodiment, the left and right seat support devices 10A arranged in the seat back side portions 3a and 3b are configured in substantially the same manner including the expansion and contraction action of the airbags 5 and differ only in that they are located at left and right sides. Thus, to facilitate understanding, Figs. 2 and 3 show only the seat back side portion 3a of the seat back 3.

The base 21 includes a flat base body 21 a and ribs 23 arranged on one surface (rib formation surface 21s) of the base body 21a. The base 21 is fixed to the frame 11 of the seat back 3 with the rear surface Sb of the base 21, on which the ribs 23 are arranged, facing a back surface (upper side in Figs. 2 and 3) of the seat back 3.

The paddle 22 has a flat shape and is located at a position opposing the base body 21a. Two side ends of the paddle 22 each include a flanged folded portion 24 extending toward the base body 21a. Each seat support device 10A holds the corresponding airbag 5 (5a, 5b) by holding the airbag 5 between the paddle 22 and the base body 21a.

When the airbag 5 is deployed, the airbag 5 pushes the paddle 22 and moves the paddle 22 away from the base body 21a, which opposes the paddle 22. Thus, when the paddle 22 pushes a seat pad 30 arranged inside the seat back 3, a pushed portion of the seat pad 30 moves together with a covering 31 of the seat back 3. The seat pad 30 is formed from, for example, a sponge cushion material. In this manner, the seat support devices 10A bulge the seat back side portions 3a and 3b toward the front of the seat 1 (lower side in Figs. 2 and 3) to change the support shapes of the seat back side portions 3a and 3b.

A support surface 3s of each of the seat back side portions 3a and 3b abuts against the vehicle occupant seated in the seat 1 from the outer side in the widthwise direction of the seat (right side in Figs. 2 and 3). Further, the base body 21a and the paddle 22 are arranged inside the seat back 3 substantially parallel to the support surface 3s. A portion of each of the seat pads 30 (30a, 30b) arranged at the corresponding seat back side portion 3a or 3b that is pushed by the paddle 22 when the airbag 5 deploys is in close contact with the paddle 22. This moves the support surface 3s of each of the seat back side portions 3a and 3b toward the front of the seat 1 and the inner side in the widthwise direction of the seat (left side in Figs. 2 and 3).

Further, as shown in Figs. 4 to 6, the seat support device 10A includes a cable 40 that connects the base 21 and the paddle 22. More specifically, the cable 40 includes a first end 40a engaged with the base 21 and a second end 40b engaged with the paddle 22. This limits the movement range of the paddle 22 that moves away from the base 21, that is, the movement range of the paddle 22 in the direction in which the airbag 5 deploys.

In detail, the first end 40a of the cable 40 includes a spherical first terminal member 45a. Further, the second end 40b of the cable 40 includes a cylindrical second terminal member 45b. The paddle 22 includes an engagement portion 46 with a slit-shaped insertion hole 46a. The second terminal member 45b is inserted into the insertion hole 46a along the slit shape and attached to the engagement portion 46.
This engages the second end 40b with the paddle 22.

In addition, the cable 40 is extended from the front side of the base 21 to the rear side of the base 21. The first end 40a of the cable 40 is engaged with the base 21 at the rear side of the base 21.

The base 21 includes a guide 48 arranged on an upper end of the base body 21a. The guide 48 includes a guide groove, into which the cable 40 is fitted, and is formed from a soft resin material having a high sliding property. The cable 40 extends along the guide 48 downwardly from the upper end of the base body 21a and along the rib formation surface 21s of the base body 21a.

Further, the seat support device 10A includes a compression coil spring 50 arranged on the rear side of the base 21 and extending in the vertical direction of the base body 21a. More specifically, the compression coil spring 50 is arranged below the guide 48 between two vertical ribs 23a and 23b, which extend in the vertical direction on the rib formation surface 21s. A pressing plate 51 is arranged between the vertical ribs 23a and 23b, and the compression coil spring 50 is arranged between the pressing plate 51 and the rib formation surface 21s. The cable 40 is inserted through the compression coil spring 50 and extended along the rib formation surface 21s.

The cable 40 includes a disk-shaped abutment member 55 (washer) arranged adjacent to the first terminal member 45a. The cable 40 extends through the abutment member 55 in a thickness-wise direction of the abutment member 55. Further, a horizontal rib 23c extends from the rib formation surface 21s of the base body 21 a. The horizontal rib 23c intersects the two vertical ribs 23a and 23b, which are located at two opposite sides of the compression coil spring 50. The horizontal rib 23c is located adjacent to the guide 48 in the proximity of the upper end of the base body 21a. The compression coil spring 50 is held on the rib formation surface 21s between the horizontal rib 23c and the abutment member 55.

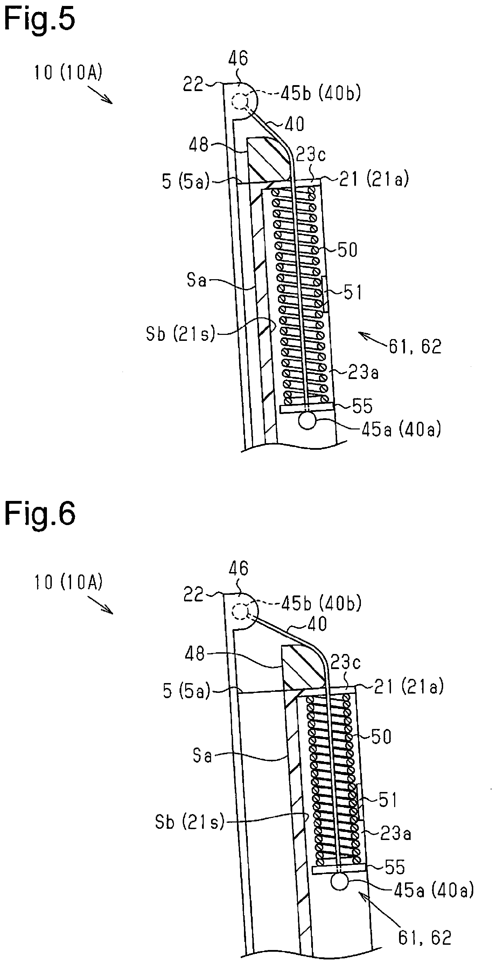

As shown in Fig. 5, the cable 40 is engaged with the base 21 on the rear surface Sb of the base 21 with the abutment member 55 at the first end 40a receiving a lower end of the compression coil spring 50. This forms an engagement mechanism 61 of the cable 40 on the rear surface Sb of the base 21.

As shown in Fig. 6, when deployment of the airbag 5 moves the paddle 22 away from the base 21, the compression coil spring 50, which is held between the abutment member 55 serving as a first abutment portion and the horizontal rib 23c serving as a second abutment portion, is further compressed.

More specifically, a stretching mechanism 62 that pulls the first end 40a of the cable 40 with the elastic force (elastic restoration force) of the compression coil spring 50 is formed on the rear surface Sb of the base 21. When the airbag 5 contracts, the stretching mechanism 62 returns the paddle 22 that has moved away from the base 21 to the initial position (position shown in Fig. 5). As a result, the support shapes of the seat back side portions 3a and 3b that have been changed by the deployment of the airbag 5 (5a, 5b) quickly return to the initial state.

Further, when the compression coil spring 50 held between the abutment member 55 and the horizontal rib 23c reaches a compression limit, the seat support device 10A of the present embodiment restricts movement that separates the paddle 22 from the base 21. This limits excessive movement of the paddle 22 and the seat back side portions 3a and 3b, which form a movable unit.

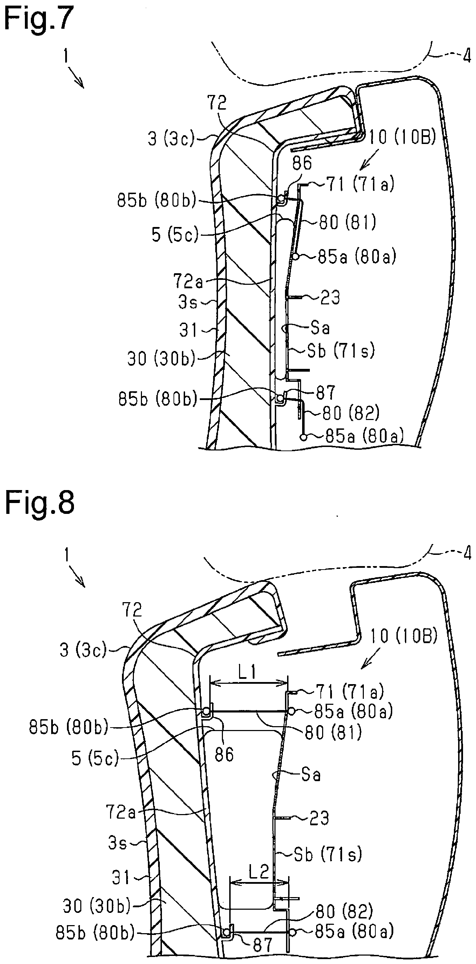

As shown in Figs. 7 and 8, in the same manner as the seat support devices 10A arranged inside the seat back side portions 3a and 3b, the seat support device 10B arranged inside the seat back shoulder portion 3c includes a base 71 and a paddle 72. More specifically, the base 71 of the seat support device 10B includes a flat base body 71a and the ribs 23 arranged on a rib formation surface 71s (right side, back surface of seat back 3 in Figs. 7 and 8) of the base body 71a. The paddle 72 includes a flat plate 72a, which is opposed to the base body 71a, and is movable toward and away from the base 71. The seat support device 10B holds the airbag 5 (5c) between the base body 71 a and the flat plate 72a of the paddle 72.

More specifically, the seat support device 10B is also configured so that the paddle 72, which is pushed by the airbag 5 when the airbag 5 is deployed, moves away from the base body 71a, which opposes the paddle 22. This changes the support shape of the seat back shoulder portion 3c that bulges toward the front of the seat 1.

The base body 71a and the flat plate 72a of the paddle 72 are arranged inside the seat back 3 substantially parallel to the support surface 3s of the seat back shoulder portion 3c. A portion of the seat pad 30 (30c) arranged in the seat back shoulder portion 3c that is pushed by the paddle 72 when the airbag 5 deploys is in close contact with the paddle 22. This moves the support surface 3s of the seat back shoulder portion 3c toward the front of the seat 1.

Further, the seat support device 10B includes a plurality of cables 80 that connect the base 71 and the paddle 72. More specifically, the seat support device 10B includes a first cable 81 having a first end 80a engaged with an upper end of the base body 71a and a second cable 82 having a first end 80a engaged with a lower end of the base body 71a. The first cable 81 and the second cable 82 limit the movement range of the paddle 72 that moves away from the base 71 at two positions, namely, the upper end and the lower end of the base 71.

In detail, as shown in Figs. 7 to 10, each cable 80 (81, 82) includes the first end 80a and a second end 80b. Each first end 80a includes a spherical first terminal member 85a, and each second end 80b includes a spherical second terminal member 85b. Further, the paddle 72 includes engagement portions 86 and 87 at two positions on the paddle 72 opposing the upper end and the lower end of the base 71. The engagement portions 86 and 87 engage the second ends 80b of the cable 80 with the paddle 22 by holding the second terminal member 85b in the same manner as the engagement portion 46 of the paddle 22 of the seat support device 10A. Through holes 88 and 89 extend through the base body 71a at positions respectively opposing the engagement portions 86 and 87. The front surface Sa and the rear surface Sb of the base 71 are in communication with each other through the through holes 88 and 89. The first cable 81 and the second cable 82 are respectively inserted through the through holes 88 and 89 to arrange the first ends 80a on the rear side of the base 71.

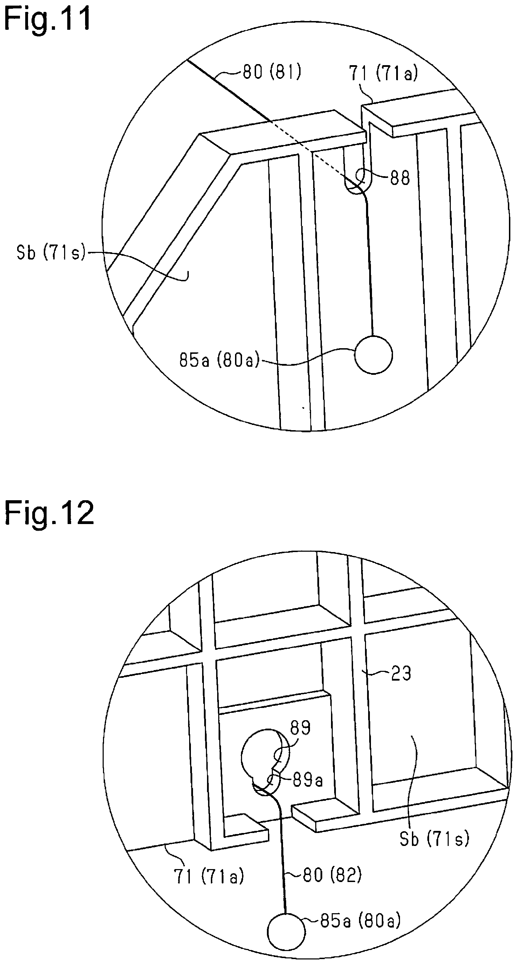

More specifically, as shown in Fig. 11, the through hole 88 (groove) is slit-shaped and opens in the upper end of the base body 71a. The first cable 81 is arranged in the through hole 88 from the upper end of the base body 71a.

Further, as shown in Fig. 12, the through hole 89 extending through the lower end of the base body 71a is shaped to allow insertion of the first terminal member 85a of the cable 80 (82) from the front side of the base 71. The through hole 89 is circular and has a larger diameter than the first terminal member 85a. A grooved recess 89a extends downwardly from the through hole 89. The second cable 82 inserted through the through hole 89 is positioned in the recess 89a by the weight of the first terminal member 85a.

The first terminal member 85a of each cable 80 is arranged at the rear side of the base 71. Each of the through holes 88 and 89, through which the corresponding cable 80 is inserted, has a hole shape that restricts passage of the first terminal member 85a from the rear side of the base 71 toward the front side of the base 71.

More specifically, as shown in Fig. 11, the width of the groove of the through hole 88 extending through the upper end of the base body 71a is narrower than the diameter of the first terminal member 85a of the first cable 81. As shown in Fig. 12, the width of the groove of the recess 89a of the through hole 89 extending through the lower end of the base body 71a is narrower than the diameter of the first terminal member 85a of the second cable 82.

In other words, the through holes 88 and 89 are configured to abut against the rib formation surface 71s of the base body 71a as the first terminal member 85a of each cable 80 moves from the rear side of the base 71 toward the front side of the base 71. This engages the first end 80a of each cable 80 with the base 71 on the rear surface Sb of the base 71.

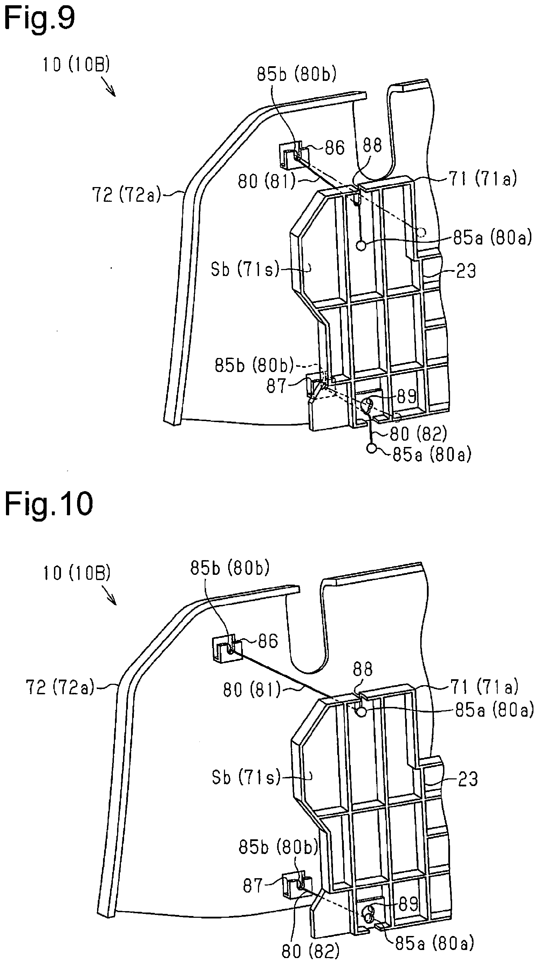

More specifically, as shown in Figs. 7 and 9, in a state in which the airbag 5 is contracted and the base body 71a is thus located proximate to the flat plate 72a of the paddle 72, the weight of the first terminal member 85a pulls the first end 80a of each cable 80 toward the rear side of the base 71. As shown in Figs. 8 and 10, when deployment of the airbag 5 moves the flat plate 72a of the paddle 72 away from the base body 71a, each cable 80 is pulled out toward the front side of the base 71 through the corresponding through hole 88 or 89. When the first terminal member 85a of each cable 80 abuts against and engages with the rib formation surface 71s of the base body 71a, each cable 80 is fully stretched. This restricts movement that separates the paddle 72 from the base 71 and limits excessive movement of the paddle 72 and the seat back shoulder portion 3c, which form a movable unit.

Further, as shown in Fig. 8, the cables 80 (81, 82) have different stretched lengths L1 and L2. That is, the first cable 81 and the second cable 82 are set to have different maximum lengths over which they are pulled out toward the front side of the base 71 when the paddle 72 is moved away from the base 71. More specifically, in the present embodiment, the stretched length L1 of the first cable 81 is greater than the stretched length L2 of the second cable 82 (L1 > L2). The first cable 81 and the second cable 82 restrict movement that separates the paddle 72 from the base 71 and set the position of the paddle 72 when the airbag 5 (5c) is deployed to full extent.

More specifically, the seat support device 10B of the present embodiment is configured so that when the airbag 5 is deployed, the upper portion of the paddle 72 projects further toward the front of the seat 1 than the lower portion of the paddle 72 so that the paddle 72 is inclined frontward. Thus, the seat back shoulder portion 3c in which the seat pad 30 (30c) is pushed by the paddle 72 is deformed to a support shape in which the upper portion of the seat back shoulder portion 3c bulges further toward the front of the seat 1 than the lower portion of the seat back shoulder portion 3c.

The present embodiment has the advantages described below.

(1) The seat support device 10 (10A, 10B) includes the base (21, 71) fixed to the frame 11 of the seat back 3 and the paddle (22, 72) movable toward and away from the base (21, 71). Further, the seat support device 10 holds the airbag 5 (5a to 5c) between the base (21, 71) and the paddle (22, 72). The seat support device 10 includes the cable (40, 80) including the first end (40a, 80a) engaged with the base (21, 71) and the second end (40b, 80b) engaged with the paddle (22, 72).

In the above structure, connecting of the base (21, 71) and the paddle (22, 72) with the cable (40, 80) restricts the movement range of the paddle (22, 72) that moves away from the base (21, 71). Further, it is desirable that the seat support device 10, which is arranged inside the seat back 3, be further compact. In this regard, the cable (40, 80) is advantageous in that there is no need for a large space regardless of whether the paddle (22, 72) moves toward or away from the base (21, 71). This ensures high reliability of the seat support device 10 with a compact and simple structure.

(2) In the seat support device 10A arranged inside the seat back side portions 3a and 3b, the cable 40 is extended from the front side of the base 21 opposing the paddle 22 toward the rear side of the base 21. Further, the first end 40a of the cable 40 includes the abutment member 55 (washer) serving as the first abutment portion, and the rear surface Sb of the base 21, i.e. the rib formation surface 21s of the base body 21a, includes the horizontal rib 23 serving as the second abutment portion. The compression coil spring 50, serving as a compression coil member, is held on the rear side of the base 21 in a state held and compressed between the abutment member 55 and the horizontal rib 23c.

In the above structure, the engagement mechanism 61 that engages the first end 40a of the cable 40 and the stretching mechanism 62 that pulls the first end 40a of the cable 40 are formed on the rear surface Sb of the base 21 in a compact manner. This allows for high reliability of the engagement mechanism 61 and the stretching mechanism 62 with a compact and simple structure.

More specifically, when the first end 40a of the cable 40 is pulled with the elastic force (elastic restoration force) of the compression coil spring 50, the paddle 22 that has moved away from the base 21 can smoothly return to the initial position when the airbag 5 contracts. Further, when the compression coil spring 50 held between the abutment member 55 of the first end 40a of the cable 40 and the horizontal rib 23c of the base 21 reaches a compression limit, movement of the paddle 22 from the base 21 is restricted. The arrangement of the compression coil spring 50, the abutment member 55, and the horizontal rib 23c on the rear side of the base 21 allows the seat support device 10A to be reduced in size. This increases the degree of freedom for the location of the seat support device 10A. Thus, the space in the seat backs 3 can be effectively used.

(3) The base 21 includes the guide 48 arranged at the upper end of the base body 21a. The guide 48 guides the cable 40 so that it extends from the front side of the base 21 toward the rear side of the base 21.

The above structure smoothens the movement of the cable 40 that is pulled out from the rear side of the base 21 toward the front side of the base 21 when the paddle 22 moves away from the base 21 and smoothens the movement of the cable 40 pulled back toward the rear side of the base 21 from the front side of the base 21 when the paddle 22 moves toward the base 21. This reduces wear of the cable 40 and the possibility of the cable 40 being tangled. Thus, high reliability is ensured. This further increases the degree of design freedom for the engagement mechanism 61 and the stretching mechanism 62 on the rear surface Sb of the base 21.

(4) The through holes 88 and 89 extend through the base 71 (more specifically, base body 71a) in the seat support device 10B arranged inside the seat back shoulder portion 3c. The first end 80a of the first cable 81 is inserted through the through hole 88, and the first end 80a of the second cable 82 is inserted through the through hole 89. The first end 80a of each cable 80 includes the first terminal member 85a that cannot pass through the corresponding through hole 88 or 89 from the rear side of the base 71 toward the front side of the base 71.

In the above structure, when each cable 80 is fully stretched, the first terminal member 85a is engaged with the rear surface Sb of the base 71. This further ensures restriction of movement of the paddle 72 away from the base 71 with a compact and simple structure. When the base 71 and the paddle 72 are proximate to each other, each cable 80 is pulled toward the rear side of the base 71 by the weight of the first terminal member 85a. This reduces the possibility of each cable 80 being tangled. As a result, higher reliability is ensured.

(5) The seat support device 10B includes the first cable 81 including the first end 80a engaged with the upper end of the base body 71a and the second cable 82 including the first end 80a engaged with the lower end of the base body 71a. The stretched length L1 of the first cable 81 is greater than the stretched length L2 of the second cable 82 (L1 > L2).

In the above structure, when the airbag 5 deploys, the paddle 72 is inclined frontward so that the upper portion of the paddle 72 projects further toward the front of the seat 1 than the lower portion of the paddle 72.

The above embodiment may be modified as described below.

In the above embodiment, the seat support devices 10A that include the compression coil spring 50 are arranged inside the seat back side portions 3a and 3b, and the seat support device 10B that does not include the compression coil spring 50 is arranged inside the seat back shoulder portion 3c. Instead, the seat support device 10B that does not include the compression coil spring 50 may be arranged inside the seat back side portions 3a and 3b, and the seat support device 10A that includes the compression coil spring 50 may be arranged inside the seat back shoulder portion 3c. Further, any one of the seat support devices 10A and 10B may be arranged in the seat back side portions 3a and 3b and the seat back shoulder portion 3c.

In the seat support device 10B that does not include the compression coil spring 50, the first terminal member 85a on the first end 80a of the cable 80 can be used as a weight to apply pulling force that is the same as that of the stretching mechanism 62 of the seat support device 10A that uses the compression coil spring 50.

In the above embodiment, the seat support devices 10 (10A, 10B) are arranged inside the seat back side portions 3a and 3b and the seat back shoulder portion 3c. However, the seat support devices 10 do not have to be arranged in this manner. For example, the seat support devices 10 may be arranged inside the seat cushion 2 and the head rest 4. When the seat support devices 10 are arranged inside the seat cushion 2, the seat support devices 10 are arranged in, for example, seat cushion sides 2a and 2b (refer to Fig. 1). In addition, the seat support devices 10 may be arranged in portions other than the seat back side portions 3a and 3b and the seat back shoulder portion 3c of the seat back 3. Further, the seat support device 10 may be arranged in an additional component of the seat such as an ottoman. Additionally, the total number of the seat support devices 10 and the combination of arrangement of the seat support devices 10 may be changed.

In the above embodiment, in each seat support device 10A, the engagement mechanism 61 and the stretching mechanism 62 are formed by the compression coil spring 50, which serves as a compression spring member, and the first abutment portion (abutment member 55) and the second abutment portion (horizontal rib 23c), which hold the compression coil spring 50 in the vertical direction. Instead, as long as the engagement mechanism 61 and the stretching mechanism 62 are arranged on the rear side of the base 21, the structures of the engagement mechanism 61 and the stretching mechanism 62 may be changed.

For example, the arrangement of the compression coil spring 50 and the second abutment portion may be changed. Further, a compression spring member other than the compression coil spring 50 may be held between the first abutment portion and the second abutment portion. A plurality of compression coil springs may be used. Additionally, the engagement mechanism 61 and the stretching mechanism 62 may be independent from each other. A tensile spring member or other biasing members may be used for the stretching mechanism 62.

In the above embodiment, in each seat support device 10A, the cable 40 is extended from the front side of the base 21 to the rear side of the base 21 through the guide 48 on the upper end of the base body 21a. Instead, the cable 40 may be extended from the front side of the base 21 to the rear side of the base 21 through another portion such as the lower end or a through hole of the base body 21a. In this case, the guide 48 does not need to be located where the cable 40 is extended.

Further, in the seat support device 10B, each cable 80 (81, 82) is inserted through the corresponding through hole 88 or 89 of the base body 71 a. The first terminal member 85a abuts against the base body 71a from the rear side of the base 71 and engages the base 71. Instead, the structure of the first end 80a of each cable 80 that engages the base 71 may be changed. For example, each cable 80 may be loose on the front side or the rear side of the base 71. Further, a structure that engages the first end 80a of each cable 80 on the front side of the base 71 and a structure that arranges a tensile spring member between the base 71 and the paddle 72 may also be employed.

In the above embodiment, the seat support device 10B includes the two cables 80 (81, 82) having different stretched lengths (L1, L2). Instead, the seat support device 10B may include three or more cables 80 having different stretched lengths. This allows the paddle 72 to be set to any position when the airbag 5 is deployed. The seat support device 10B may include a plurality of cables 80 having the same stretched length. All the cables 80 may have the same stretched lengths.

## Claims

1. A seat support device comprising:
a base fixed to an inner side of a seat;
a paddle movable toward and away from the base;
an airbag arranged between the base and the paddle, wherein the airbag pushes a seat pad of the seat with the paddle when deployed; and
a cable including a first end engaged with the base and a second end engaged with the paddle.

2. The seat support device according to claim 1, wherein
the cable is extended from a front side of the base opposing the paddle toward a rear side of the base, and
the rear side of the base includes an engagement mechanism that engages the first end of the cable and a stretching mechanism that pulls the first end of the cable.

3. The seat support device according to claim 2, comprising:
a first abutment portion arranged on the first end of the cable;
a second abutment portion arranged on a rear surface of the base; and
a compression spring member held between the first abutment portion and the second abutment portion.

4. The seat support device according to claim 2 or 3, wherein the base includes a guide that guides the cable from the front side of the base toward the rear side of the base.

5. The seat support device according to any one of claims 1 to 4, wherein
the base includes a through hole through which a front surface of the base opposing the paddle is in communication with a rear surface of the base,
the cable is inserted through the through hole, and
the first end of the cable includes a terminal member that cannot pass through the through hole from a rear side of the base toward a front side of the base.

6. The seat support device according to any one of claims 1 to 5, comprising a plurality of cables having different stretched lengths.
